(19) Europäisches Patentamt
European Patent Office
Office européen des brevets

(11) **EP 4 126 436 B1**

(12) **EUROPÄISCHE PATENTSCHRIFT**

(45) Veröffentlichungstag und Bekanntmachung des Hinweises auf die Patenterteilung:
**18.12.2024 Patentblatt 2024/51**

(21) Anmeldenummer: **21716073.8**

(22) Anmeldetag: **23.03.2021**

(51) Internationale Patentklassifikation (IPC):
**B23K 26/00** *(2014.01)* **B23K 26/0622** *(2014.01)*
**B23K 26/352** *(2014.01)* **B23K 26/53** *(2014.01)*
**B23K 103/00** *(2006.01)*

(52) Gemeinsame Patentklassifikation (CPC):
**B23K 26/355; B23K 26/0006; B23K 26/0624;**
**B23K 26/53;** B23K 2103/54

(86) Internationale Anmeldenummer:
**PCT/EP2021/057440**

(87) Internationale Veröffentlichungsnummer:
**WO 2021/197929 (07.10.2021 Gazette 2021/40)**

(54) **VERFAHREN ZUM HERSTELLEN EINER LICHTABLENKUNGSSTRUKTUR, VERWENDUNG EINES SUBSTRATS MIT EINER SOLCHEN LICHTABLENKUNGSSTRUKTUR, UND LICHTABLENKEINHEIT MIT EINER SOLCHEN LICHTABLENKUNGSSTRUKTUR**

METHOD FOR PRODUCING A LIGHT DEFLECTION STRUCTURE, USE OF A SUBSTRATE WITH A LIGHT DEFLECTION STRUCTURE OF THIS TYPE, AND LIGHT DEFLECTION UNIT COMPRISING A LIGHT DEFLECTION STRUCTURE OF THIS TYPE

PROCÉDÉ POUR PRODUIRE UNE STRUCTURE DE DÉVIATION DE LUMIÈRE, UTILISATION D'UN SUBSTRAT AVEC UNE TELLE STRUCTURE DE DÉVIATION DE LUMIÈRE, ET UNITÉ DE DÉVIATION DE LUMIÈRE ÉQUIPÉE D'UNE TELLE STRUCTURE DE DÉVIATION DE LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2020 DE 102020204123**

(43) Veröffentlichungstag der Anmeldung:
**08.02.2023 Patentblatt 2023/06**

(73) Patentinhaber: **TRUMPF Laser- und Systemtechnik SE**
**71254 Ditzingen (DE)**

(72) Erfinder:
• **ZIMMERMANN, Felix**
**71254 Ditzingen (DE)**
• **KUMKAR, Malte**
**99425 Weimar (DE)**

(74) Vertreter: **Trumpf Patentabteilung**
**Trumpf SE + Co. KG**
**TH550 Patente und Lizenzen**
**Johann-Maus-Straße 2**
**71254 Ditzingen (DE)**

(56) Entgegenhaltungen:
**EP-A1- 2 965 852        EP-B1- 2 965 852**
**WO-A1-2019/158910        WO-A1-2020/212728**

**Beschreibung**

Die Erfindung betrifft ein Verfahren zum Herstellen einer Lichtablenkungsstruktur, und eine Lichtablenkeinheit mit einer solchen Lichtablenkungsstruktur entsprechend dem Oberbegriff der Ansprüche 1 und 8 (siehe z.B. EP 2 965 852 A1), und eine Verwendung eines Substrats mit einer solchen Lichtablenkungsstruktur, siehe Anspruch 7

Eine solche Lichtablenkungsstruktur umfasst periodische Materialmodifikationen, insbesondere Brechzahlmodifikationen oder streuende Störungen, beispielsweise Leerstellen oder Beschädigungen, im Volumen oder an der Oberfläche eines Substrats, wobei diese Materialmodifikationen Eigenschaften von Licht beeinflussen, welches von dem Substrat transmittiert wird.

Periodische Materialmodifikationen sind bisher insbesondere eingesetzt worden, um Polarisationseigenschaften des transmittierten Lichts zu beeinflussen. Es besteht aber vielfach der Bedarf an lichtablenkenden Strukturen, die insbesondere eine vorbestimmte Stärke und/oder Orientierung der Lichtablenkung aufweisen. Beispielsweise soll in einer Laserscheibe erwünschtes, durch stimulierte Emissionen erzeugtes Laserlicht in eine bestimmte, wohldefinierte Richtung ausgekoppelt werden, wobei unerwünschtes, spontan emittiertes Licht über einen möglichst breiten Raumwinkelbereich abgestrahlt werden soll. In anderen Bauelementen, beispielsweise Solarzellen, ergibt sich demgegenüber das Bedürfnis, eingestrahltes Licht nach Möglichkeit einzufangen und im Bauteil zu halten, also nicht mehr aus dem Bauteil heraus zu lenken.

WO 2019158910 A1 (Stand der Technik nach Artikel 54 (3) EPÜ) offenbart beispielsweise ein optisches Element zum Modifizieren eines einfallenden Laserstrahls, der sich durch das optische Element von einer Eingangsfläche zu einer Ausgangsfläche über einen geometrischen Phasendoppelbrechungseffekt ausbreitet. Das optische Element umfass ein Substrat aus einem transparenten amorphen Material und eine strukturelle Modifikation in einem Volumen. Die strukturelle Modifikation beinhalten eine Vielzahl von zufällig positionierten Nanostrukturen, wobei jede Nanostruktur eine abgeflachte Kugelform mit einem elliptischen Querschnitt in einer Ebene parallel zur Eingangsfläche aufweist.

Der vorliegenden Erfindung liegt die Aufgabe zugrunde, ein Verfahren zum Herstellen einer Lichtablenkungsstruktur zu schaffen, welche zumindest in gewissem Maße eine gezielte Lichtablenkung ermöglicht. Weiterhin ist es Aufgabe der Erfindung, die Verwendung eines Substrats mit einer solchen Lichtablenkungsstruktur anzugeben, sowie eine Lichtablenkeinheit mit einer solchen Lichtablenkungsstruktur zu schaffen.

Die Aufgabe wird gelöst, indem die vorliegende technische Lehre bereitgestellt wird, insbesondere die Lehre der unabhängigen Ansprüche 1, 7, und 8, sowie der in den abhängigen Ansprüchen und der Beschreibung offenbarten Ausführungsformen.

Die Aufgabe wird insbesondere gelöst, siehe Anspruch 1, indem ein Verfahren zum Herstellen einer Lichtablenkungsstruktur geschaffen wird, wobei ein Substratmaterial eines Substrats mit wenigstens einem gepulsten Laserstrahl bestrahlt wird und wobei das Substratmaterial transparent oder teiltransparent für die zum Herstellen der Lichtablenkungsstruktur eingesetzte, gepulste Laserstrahlung ist, wobei das Verfahren folgende Schritte aufweist. Es wird a) eine erste Mehrzahl von Wechselwirkungsbereichen entlang eines ersten Pfads mit räumlicher Überlappung der Wechselwirkungsbereiche erzeugt. Es wird b) eine zweite Mehrzahl von Wechselwirkungsbereichen mit räumlicher Überlappung der Wechselwirkungsbereiche entlang eines zweiten Pfads erzeugt, wobei der zweite Pfad zu dem ersten Pfad versetzt ist und räumlich mit dem ersten Pfad überlappt. Optional wird c) eine weitere Mehrzahl von Wechselwirkungsbereichen mit räumlicher Überlappung der weiteren Wechselwirkungsbereiche entlang eines weiteren, zu den zuvor verwendeten Pfaden versetzten Pfads und mit räumlicher Überlappung zu dem unmittelbar zuvor verwendeten Pfad erzeugt. Optional wird d) der Schritt c) mehrfach ausgeführt, um eine vorbestimmte Anzahl von Pfaden zu erhalten, insbesondere bis die vorbestimmte Anzahl von Pfaden erhalten ist. Es werden - in den überlappenden

Wechselwirkungsbereichen - Typ-II-Modifikationen des Substratmaterials erzeugt, wobei sich die Typ-II-Modifikationen aufgrund selbstorganisierender Effekte durch mehrfaches Bestrahlen einer selben Stelle ergeben. Es wird wenigstens ein Prozessparameter bei der Herstellung von Pfad zu Pfad verändert, um eine vorbestimmte beugende oder streuende Ablenkungsgeometrie zu erzeugen, wobei der Prozessparameter ausgewählt ist aus einer Gruppe, bestehend aus: Einem Spektrum, einer Pulsenergie, einer Fluenz, einer zeitlichen Pulsbreite, einer zeitlichen Pulsform, einer räumlichen Pulsform, einer Strahldynamik, einer Polarisation, insbesondere Polarisationsrichtung, einer Pulsrepetitionsrate, einer Mikropulsrepetitionsrate, einer Fokusgröße, einer Fokus-Querschnittsform, und einem Fokusprofil, einem Vorschub eines Laserspots pro Zeiteinheit relativ zu dem Substrat (7), einer Pulszahl pro Laserspot, und einem Überlapp unmittelbar einander benachbarter Wechselwirkungsbereiche (9) miteinander. Entsprechend der Erfindung bedeutet dies, dass der wenigstens eine Prozessparameter von Pfad zu Pfad so verändert wird, dass die vorbestimmte Ablenkungsgeometrie erzeugt wird. Mithilfe des Verfahrens ist es möglich, eine Lichtablenkungsstruktur zu schaffen, die in definierter Weise eine vorbestimmte Ablenkungscharakteristik für bestimmte Wellenlängen von Licht aufweist, welches durch das Substratmaterial transmittiert wird.

Unter einem Wechselwirkungsbereich wird hier insbesondere ein räumlicher Bereich verstanden, in welchem der wenigstens eine Laserstrahl mit dem Substratmaterial wechselwirkt. Unter einer Wechselwirkung wird dabei insbesondere verstanden, dass das Substratmaterial durch den Laserstrahl in dem Wechselwirkungsbereich eine dauerhafte, das heißt unter Normalbedingungen - insbesondere bei 1013 mbar und 25 °C - beständige, Materialveränderung erfährt. Der Wechselwirkungsbereich ist also ein räumlicher Bereich, in dem die Energiedichte oder Leistungsdichte des Laserstrahls höher ist als eine Modifikationsschwelle des Substratmaterials für dauerhafte Materialveränderungen. Unter einer räumlichen Überlappung der Wechselwirkungsbereiche wird hier insbesondere verstanden, dass zumindest einander unmittelbar benachbarte Wechselwirkungsbereiche - entlang eines Pfades oder zumindest in unmittelbar benachbarten Pfaden - miteinander überlappen, sodass insbesondere die Laserstrahlung in einem zweiten Wechselwirkungsbereich, der mit einem ersten Wechselwirkungsbereich überlappt, mit der in dem ersten Wechselwirkungsbereich erzeugten Materialmodifikation oder mit der Laserstrahlung in dem ersten Wechselwirkungsbereich interagiert. Die Materialmodifikation oder Laserstrahlung in dem ersten Wechselwirkungsbereich beeinflusst die Wirkung der Laserstrahlung in dem zweiten Wechselwirkungsbereich; umgekehrt beeinflusst bevorzugt die Laserstrahlung in dem zweiten Wechselwirkungsbereich die Materialmodifikation oder Laserstrahlung in dem ersten Wechselwirkungsbereich.

Das Substratmaterial ist transparent oder teiltransparent. Insbesondere ist das Substratmaterial transparent oder teiltransparent für die zum Herstellen der Lichtablenkungsstruktur eingesetzte, gepulste Laserstrahlung. Insbesondere ist das Substratmaterial transparent oder teiltransparent sowohl für die zum Herstellen der Lichtablenkungsstruktur eingesetzte gepulste Laserstrahlung als auch für wenigstens eine Zielwellenlänge von Licht, welches bestimmungsgemäß durch die hergestellte Lichtablenkungsstruktur abgelenkt werden soll. Unter Transparenz wird insbesondere verstanden, dass eine Transmission von Strahlung einer bestimmten Wellenlänge in dem Substratmaterial bei cw-Strahlung mehr als 80 %, vorzugsweise mehr als 85 %, vorzugsweise mehr als 90 % beträgt.

Gemäß der Erfindung ist vorgesehen, dass der wenigstens eine Prozessparameter ausgewählt ist aus einer Gruppe, bestehend aus: Einem Spektrum des Laserstrahls, einer Pulsenergie des Laserstrahls, einer Fluenz des Laserstrahls, einer zeitlichen Pulsbreite des Laserstrahls, einer zeitlichen Pulsform des Laserstrahls, einer räumlichen Pulsform des Laserstrahls, einer Strahldynamik des Laserstrahls, einer Polarisation, insbesondere einer Polarisationsrichtung des Laserstrahls, einer Pulsrepetitionsrate des Laserstrahls, einer Mikropulsrepetitionsrate des Laserstrahls, einer Fokusgröße, insbesondere einem Fokusdurchmesser oder Laserspotdurchmesser des Laserstrahls, einer Fokus-Querschnittsform des Laserstrahls, einem Fokusprofil des Laserstrahls, einem Vorschub eines Laserspots des wenigstens einen Laserstrahls pro Zeiteinheit relativ zu dem Substrat, einer Pulszahl pro Laserspot oder pro Längeneinheit, und einem Überlapp unmittelbar einander benachbarter Wechselwirkungsbereiche miteinander.

Unter einer zeitlichen Pulsform des Laserstrahls wird insbesondere die Form einer Einhüllenden des zeitlichen Intensitätsverlaufs eines Laserpulses verstanden. Demgegenüber wird unter einer Strahldynamik des Laserstrahls eine zeitliche Struktur des Intensitätsverlaufs innerhalb eines Pulses, mithin quasi eine zeitliche Mikrostruktur des Laserpulses, verstanden. Dies schließt insbesondere ein, ob der Laserpuls eine zusammenhängende zeitliche Pulsform aufweist oder aus einem Burst oder einer Mehrzahl von Bursts besteht und somit als Pulszug ausgebildet ist.

Unter einer Pulsrepetitionsrate wird insbesondere eine Makropulsrepetitionsrate verstanden, das heißt eine Repetitionsrate der einzelnen Laserpulse oder Pulszüge. Demgegenüber wird unter einer Mikropulsrepetitionsrate eine Repetitionsrate der einzelnen Mikropulse oder Bursts innerhalb eines Laserpulses oder Pulszuges verstanden.

Unter einer Fokusgröße wird insbesondere eine Spotgröße des Laserstrahls verstanden, insbesondere eine charakteristische Ausdehnung oder Länge des Laserspots in einer Ebene senkrecht zur Propagationsrichtung, oder eine Fläche des Laserspots in der Ebene. Im Falle eines Gauß-Strahls ist der Laserspot - oder kurz Spot - definiert als das zweifache des Strahltaillenradius R, der sich ergibt aus der Peak-Wellenlänge $\lambda$ dividiert durch die Summe aus der Kreiszahl $\pi$ und der numerischen Apertur NA des Lasersystems ($R = \lambda/(\pi*NA)$).

Unter einer Fokus-Querschnittsform wird insbesondere die Querschnittsform des Laserspots verstanden. Unter einem Fokusprofil wird insbesondere das Profil des Laserspots, insbesondere in der Brennebene, verstanden. Ein Profil ist dabei insbesondere ein räumlicher Intensitätsverlauf, das heißt insbesondere der Intensitätsverlauf in der Brennebene oder auf der Spotfläche.

Damit sich Typ II-Modifikationen ergeben - beispielsweise selbst-organisierende Nanostrukturen, Nanogitter oder periodisch angeordnete Zerstörungen -, muss die Pulszahl pro Laserspot größer als 1 sein. Dabei ergibt sich die Pulszahl pro Laserspot aus der Spotgröße multipliziert mit der Pulsrepetitionsrate dividiert durch die Vorschubgeschwindigkeit. Die Pulsrate pro Laserspot entspricht demnach letztlich einer Pulszahl pro Längeneinheit, wobei diese Pulszahl pro Längeneinheit so gewählt sein muss, dass über die Längenausdehnung des Laserspots in Vorschubrichtung mehr als ein Puls auftrifft.

Werden die Wechselwirkungsbereiche nicht zeitlich nacheinander sondern simultan erzeugt, entspricht die Pulszahl pro Laserspot beziehungsweise die Pulszahl pro Längeneinheit insbesondere dem Überlapp unmittelbar einander benachbarter Wechselwirkungsbereiche.

Gemäß der Erfindung ist vorgesehen, dass eine beugende oder streuende Ablenkungsgeometrie erzeugt wird. Für eine beugende Ablenkungsgeometrie wird hierfür bevorzugt eine Periode der Lichtablenkungsstruktur größer oder ungefähr gleich einer Wellenlänge gewählt, auf welche die Ablenkungsstruktur bestimmungsgemäß wirken soll. Die Ablenkungsstruktur weist dann für diese Wellenlänge einen beugenden Effekt auf. Alternativ wird eine streuende Ablenkungsgeometrie erzeugt. Hierzu wird bevorzugt die Periode der Lichtablenkungsstruktur kleiner gewählt als die Wellenlänge, auf welche die Lichtablenkungsstruktur bestimmungsgemäß wirken soll. Das Substrat stellt dann ein effektives Medium mit Brechungsunterschied dar, was zu einer anisotropen Streuung von Licht der bestimmungsgemäßen Wellenlänge führt.

Unter Ablenkung wird demgemäß allgemein eine Veränderung der Propagationsrichtung von Licht verstanden, wobei der Begriff "Ablenkung" insbesondere Beugung oder Streuung umfasst.

Insbesondere ermöglicht die hier vorgeschlagene Lichtablenkungsstruktur eine lokalisierte Lichtablenkung.

Es ist möglich, dass das Verfahren mit genau einem gepulsten Laserstrahl durchgeführt wird, insbesondere mit einem gepulsten Laserstrahl pro Wechselwirkungsbereich oder einem auf die verschiedenen Wechselwirkungsbereiche geeignet aufgeteilten gepulsten Laserstrahl. Es wird dann bevorzugt durch geeignete Fokussierung gewährleistet, dass die Fluenz, das heißt insbesondere die Energie-Flächendichte, in den Wechselwirkungsbereichen größer ist als die Modifikationsschwelle des Substratmaterials.

Es ist alternativ auch möglich, dass eine Mehrzahl von gepulsten Laserstrahlen, insbesondere zwei gepulste Laserstrahlen pro Wechselwirkungsbereich, eingesetzt wird, beispielsweise indem die gepulsten Laserstrahlen in dem jeweiligen Wechselwirkungsbereich zur Überlappung gebracht werden. Die Fluenz liegt dann gerade dort über der Modifikationsschwelle, wo sich die Laserstrahlen überlappen, wobei die einzelnen Laserstrahlen für sich genommen keine Fluenz oberhalb der Modifikationsschwelle liefern.

Eine Mehrzahl von Laserstrahlen kann auch erzeugt werden, indem ein von einer Laserquelle erzeugter gepulster Laserstrahl in geeigneter Weise auf eine Mehrzahl von Teil-Laserstrahlen aufgeteilt wird. Dies wird auch als Multiplexing bezeichnet.

Die Lichtablenkungsstruktur wird bevorzugt in dem Substratmaterial erzeugt, das heißt in einem Volumen des Substratmaterials. Insbesondere wird bevorzugt eine dreidimensionale Lichtablenkungsstruktur im Volumen des Substratmaterials erzeugt. Entsprechend werden bevorzugt die verschiedenen Pfade nicht lediglich entlang einer Ebene in dem Substratmaterial angeordnet, sondern vielmehr dreidimensional im Volumen verteilt.

Alternativ oder zusätzlich ist es möglich, dass die Lichtablenkungsstruktur auf der Oberfläche des Substratmaterials erzeugt wird. Die einzelnen Pfade verlaufen dann zumindest teilweise oder auch vollständig entlang der Oberfläche des Substrats.

Als Substratmaterial wird bevorzugt ein Silikathaltiges Material verwendet, insbesondere Silikat, Fused Silica, oder Borosilikat. Insbesondere kann das Substrat ein Glas sein, insbesondere Quarzglas, insbesondere Borosilikatglas. Es ist aber auch möglich, dass das Substrat ein Polymer, eine Keramik, ein Halbleiter, insbesondere umfassend Si und/oder GaAs, oder ein Kristall ist.

Dass zwei Pfade miteinander räumlich überlappen bedeutet insbesondere, dass die Wechselwirkungsbereiche der beiden Pfade räumlich miteinander überlappen.

Dass ein Pfad zu einem anderen Pfad versetzt ist bedeutet insbesondere, dass der Pfad, insbesondere eine Schwerpunkts- oder Mittellinie des Pfads, senkrecht zu einer Schwerpunkts- oder Mittellinie des anderen Pfads beabstandet ist.

Unter Typ II-Modifikationen werden entsprechend der Erfindung solche Materialmodifikationen des Substratmaterials verstanden, die sich aufgrund selbstorganisierender Effekte durch mehrfaches Bestrahlen einer selben Stelle - deswegen die räumliche Überlappung der Wechselwirkungsbereiche sowie der Pfade - ergeben. Insbesondere wechselwirkt dabei die zuvor bestrahlte Stelle optisch mit dem Laserstrahl beim erneuten Bestrahlen derselben Stelle; bevorzugt wirkt die zuvor bestrahlte Stelle als Gitter. Hierbei bilden sich anisotrope Strukturen, die aufgrund ihrer Anisotropie eine gerichtete Ablenkungswirkung aufweisen. Eine Typ II Modifikation zeichnet sich insbesondere dadurch aus, dass der effektive Brechungsindex lateral unterschiedlich ist. Die Modifikation verhält sich somit insbesondere wie ein einachsiger optischer Kristall. Dass Typ II-Modifikationen erzeugt werden, bedeutet demnach insbesondere, dass wenigstens ein Prozessparameter, insbesondere ein Strahlparameter des wenigstens einen Laserstrahls und/oder wenigstens ein Anordnungsparameter einer Anordnung der Wechselwirkungsbereiche, so gewählt wird, dass Typ II-Modifikationen gebildet werden. Die Erzeugung der Typ-II-Modifikationen beruht insbesondere auf einem optischen Effekt, nicht auf einem thermischen Effekt.

Dass wenigstens ein Prozessparameter von Pfad zu Pfad verändert wird, bedeutet insbesondere, dass für wenigstens zwei Pfade verschiedene Werte für wenigstens einen Prozessparameter gewählt werden. Insbesondere wird bevorzugt ein Wert oder eine Einstellung für wenigstens einen Prozessparameter zwischen der Herstellung eines vorhergehenden Pfads und der Herstellung eines nächstens Pfads verändert. Es ist möglich, dass mehr als ein Prozessparameter verändert wird, oder dass alle Prozessparameter verändert werden. Auch ist eine Ausführungsform des Verfahrens möglich, bei dem alle Prozessparameter für eine Mehrzahl von Pfaden konstant gehalten werden, wobei wenigstens ein Prozessparameter für wenigstens einen weiteren Pfad oder eine Mehrzahl von weiteren Pfaden verändert wird. Es ist also insbesondere auch möglich, dass Pfade gruppenweise mit konstanten Prozessparametern erzeugt werden, wobei wenigstens ein Prozessparameter zwischen verschiedenen Gruppen von Pfaden verändert wird. Bevorzugt wird allerdings für jeden Pfad wenigstens ein Prozessparameter anders gewählt als bei einem unmittelbar benachbarten, insbesondere zuvor verwendeten und/oder danach erzeugten Pfad. Es ist möglich, dass stets derselbe Prozessparameter oder dieselbe Mehrzahl von Prozessparametern von Pfad zu Pfad variiert wird. Es ist auch möglich, dass von Pfad zu Pfad verschiedene Prozessparameter variiert werden.

Unter einer vorbestimmten Ablenkungsgeometrie wird insbesondere verstanden, dass die Lichtablenkungsstruktur räumlich-geometrisch so ausgebildet ist, dass Licht einer bestimmten Wellenlänge mit definierter Stärke in einen definierten Raumwinkelbereich abgelenkt wird.

Die erste Mehrzahl, die zweite Mehrzahl und die wenigstens eine weitere Mehrzahl können verschiedene Anzahlen sein, es ist aber auch möglich, dass zumindest zwei dieser Mehrzahlen die gleiche Anzahl bedeuten.

Gemäß einer Weiterbildung der Erfindung ist vorgesehen, dass der gepulste Laserstrahl eine zeitliche Pulsbreite von mindestens 100 fs bis höchstens 5 ps aufweist. Der gepulste Laserstrahl umfasst also insbesondere ultrakurze Laserpulse.

Gemäß einer Weiterbildung der Erfindung ist vorgesehen, dass durch Veränderung des wenigstens einen Prozessparameters eine induzierte Gitterperiode der Lichtablenkungsstruktur moduliert wird. Auf diese Weise wird ein sogenannter Chirp in der Lichtablenkungsstruktur erzeugt, woraus eine breite Ablenkungs- und/oder Streuwinkelverteilung resultiert. Solche gechirpten Strukturen mit variabler Periode, insbesondere Gitter, können mit konstanter oder variabler Ausrichtung erzeugt werden.

Gemäß einer Weiterbildung der Erfindung ist vorgesehen, dass eine Mehrzahl von Nanogitterschichten hintereinander in dem Substrat erzeugt wird. Hierdurch kann die Ablenkungswirkung verstärkt werden.

Gemäß einer Weiterbildung der Erfindung ist vorgesehen, dass der wenigstens eine Prozessparameter innerhalb wenigstens eines Pfads, ausgewählt aus dem ersten Pfad, dem zweiten Pfad, und optional einem weiteren Pfad gemäß einem der Schritte c) und d), verändert wird, um die vorbestimmte Ablenkungsgeometrie zu erzeugen. Somit kann die Lichtablenkungsstruktur noch feiner modifiziert werden. Insbesondere kann auf diese Weise die induzierte Gitterperiode der Lichtablenkungsstruktur innerhalb eines Pfades verändert, insbesondere moduliert werden. Insbesondere können 2D-angepasste Strukturen erzeugt werden, wobei innerhalb eines Pfades insbesondere die Gitterperiode geändert wird, insbesondere mittels variabler Pulsenergie und/oder variablem Vorschub eines Laserspots des wenigstens einen Laserstrahls pro Zeiteinheit relativ zu dem Substrat, und zudem die Gitterperiode in gleicher oder anderer Weise von Pfad zu Pfad geändert wird, sodass sich ein zweidimensional gechirptes Gitter ergibt, das Lichtanteile mit verschiedenen Einfallswinkeln im gleichen Austrittswinkel ablenkt oder streut, oder - je nach Anwendungsfall - andersherum. Ebenso kann die Beugungsantwort kontinuierlich zu- oder abnehmend gestaltet werden, indem insbesondere ein Prozessparameter, insbesondere die Pulsrepetitionsrate, entlang eines Pfades derart verändert wird, dass die Gitterbildung gehemmt wird, wobei sich dadurch das insbesondere von Pfad zu Pfad gechirpte Gitter entlang des Vorschubs bezüglich seiner Effizienz ändert.

Alternativ wird der wenigstens eine Prozessparameter vorzugsweise innerhalb eines jeden Pfads konstant gehalten und nur von Pfad zu Pfad variiert. Insbesondere werden bevorzugt alle Prozessparameter innerhalb desselben Pfades konstant gehalten. Gemäß einer Weiterbildung der Erfindung ist vorgesehen, dass wenigstens einer der Pfade, ausgewählt aus dem ersten Pfad, dem zweiten Pfad und optional einem weiteren Pfad gemäß einem der Schritte c) und d), entlang einer Geraden verläuft. Dies stellt eine besonders einfache Ausgestaltung des Verfahrens dar.

Alternativ oder zusätzlich ist es möglich, dass wenigstens einer der Pfade, ausgewählt aus dem ersten Pfad, dem zweiten Pfad und optional einem weiteren Pfad gemäß einem der Schritte c) und d), zumindest bereichsweise eine endliche Krümmung aufweist. Der Pfad kann auch insgesamt gekrümmt sein. Hierbei können noch flexibler und genauer abgestimmte Lichtablenkungsstrukturen sowie Ablenkungsgeometrien erzeugt werden. Dass die Krümmung endlich ist, bedeutet dass sie größer ist als null, das heißt sie verschwindet nicht. Die Krümmung kann entlang des Pfads konstant oder zumindest abschnittsweise variierend sein.

Der wenigstens eine Prozessparameter ist insbesondere ausgewählt aus wenigstens einem Strahlparameter des wenigstens einen Laserstrahls und wenigstens einem Anordnungsparameter der Anordnung der Wechselwirkungsbereiche. Ein Anordnungsparameter betrifft dabei insbesondere die räumlich-geometrische Anordnung der Wechselwirkungsbereiche oder die Erzeugung der räumlich-geometrischen Anordnung der Wechselwirkungsbereiche. Wie im Folgenden noch erläutert wird, können die verschiedenen Wechselwirkungsbereiche simultan oder zeitlich nacheinander erzeugt werden, wobei sie zeitlich nacheinander insbesondere durch Verlagern eines Fokusbereichs oder Laserspots des wenigstens einen Laserstrahls relativ zu dem Substrat erzeugt werden können. In diesem letzten Fall ist der Anordnungsparameter insbesondere ein Verlagerungsparameter der Relativverlagerung des Laserstrahls relativ zu dem Substrat.

Soweit hier und im Folgenden von einer Relativverlagerung oder auch nur Verlagerung des Laserstrahls relativ zu dem Substrat die Rede ist, ist dies keinesfalls einschränkend dahin zu verstehen, dass der Laserstrahl verlagert und das Substrat raumfest gehalten wird. Vielmehr ist es möglich, dass der Laserstrahl raumfest gehalten wird, wobei das Substrat verlagert wird. Es ist auch möglich, dass sowohl der Laserstrahl als auch das Substrat verlagert werden. Eine besonders bevorzugte, weil besonders einfach zu verwirklichende Ausgestaltung ist allerdings, dass das Substrat raumfest gehalten wird, wobei der Laserstrahl verlagert wird.

Gemäß einer Weiterbildung der Erfindung ist vorgesehen, dass die Wellenlänge, insbesondere Peak-Wellenlänge, des Laserstrahls von mindestens 200 nm bis höchstens 5000 nm beträgt.

Alternativ oder zusätzlich beträgt die Pulsrepetitionsrate bevorzugt von mindestens 1 Hz bis höchstens 5 MHz, vorzugsweise bis höchstens 4 MHz, vorzugsweise bis höchstens 3 MHz, vorzugsweise bis höchstens 2 MHz, vorzugsweise bis höchstens 1 MHz.

Alternativ oder zusätzlich beträgt die Mikropulsrepetitionsrate bevorzugt von mindestens 1 MHz bis höchstens 50 GHz.

Alternativ oder zusätzlich beträgt die zeitliche Pulsbreite bevorzugt von mindestens 100 fs bis höchstens 5 ps.

Alternativ oder zusätzlich beträgt die Fluenz bevorzugt mehr als $0,01$ J/cm$^2$, insbesondere für Glas, insbesondere Fused Silica, als Substrat, vorzugsweise mehr als $0,1$ J/ cm$^2$, vorzugsweise mehr als 1 J/cm$^2$. Die Modifikationsschwelle im Volumen des Substratmaterials beträgt dabei typischerweise mehr als $0,1$ J/cm$^2$, gegebenenfalls auch mehr als 1 J/ cm$^2$. An der Oberfläche des Substratmaterials ist die Modifikationsschwelle demgegenüber reduziert und beträgt typischerweise mehr als $0,01$ J/cm$^2$, gegebenenfalls auch mehr als $0,1$ J/ cm$^2$. Die verwendete Fluenz wird bevorzugt größer gewählt als der jeweils relevante Wert für die Modifikationsschwelle.

Alternativ oder zusätzlich ist vorgesehen, dass der Vorschub des Laserspots pro Zeiteinheit relativ zu dem Substrat bevorzugt von mindestens $0,01$ mm/s bis höchstens 1000 mm/s, vorzugsweise bis höchstens 500 mm/s beträgt.

Alternativ oder zusätzlich ist vorgesehen, dass die Pulszahl pro Längeneinheit bevorzugt größer ist als ein Puls pro $\mu$m ($1/\mu$m), wobei auch hier der Begriff "Puls" einen Pulszug einschließt.

Gemäß einer Weiterbildung der Erfindung ist vorgesehen, dass die Wechselwirkungsbereiche zumindest entlang eines Pfads, ausgewählt aus dem ersten Pfad, dem zweiten Pfad, und optional einem weiteren Pfad gemäß einem der Schritte c) und d), simultan erzeugt werden. Dies kann insbesondere mittels eines raumzeitlich geformten Anregungsstrahls und/oder mittels einer Phasenmaske erfolgen.

Alternativ werden die Wechselwirkungsbereiche zumindest entlang eines Pfades, ausgewählt aus dem ersten Pfad, dem zweiten Pfad, und optional einem weiteren Pfad gemäß einem der Schritte c) und d), bevorzugt zeitlich nacheinander, insbesondere durch Verlagern eines Fokusbereichs oder Laserspots des wenigstens eines Laserstrahls relativ zu dem Substrat, erzeugt. Das Einschreiben der Lichtablenkungsstruktur in das Substrat erfolgt dann insbesondere punktweise, insbesondere durch Scannen des Laserstrahls.

Vorzugsweise werden die Wechselwirkungsbereiche entlang aller Pfade simultan oder zeitlich nacheinander erzeugt.

Vorzugsweise werden die Schritte a) bis d) insgesamt entweder simultan oder zeitlich nacheinander durchgeführt. Es ist also insbesondere möglich, dass die Schritte a) bis d) auch simultan, insbesondere mittels eines raumzeitlich geformten Anregungsstrahls und/oder mittels einer Phasenmaske, durchgeführt werden. Es ist auch möglich, dass eine Mehrzahl von Laserstrahlen zueinander versetzt simultan entlang der Pfade verlagert werden, insbesondere wenigstens ein Laserstrahl pro Pfad. In dem Fall der simultan durchgeführten Schritte bezieht sich der Begriff "zuvor verwendeter Pfad" in Schritt c) auf die zuvor genannten Pfade, die jedoch gleichzeitig mit dem jeweiligen weiteren Pfad erzeugt werden. Insoweit bezieht sich auch der Begriff "mehrfaches Ausführen" in Schritt d) dann darauf, dass schlicht eine Mehrzahl weiterer Pfade erzeugt wird.

Das Verlagern des Fokusbereichs oder Laserspots relativ zu dem Substrat kann senkrecht zur Propagationsrichtung des Laserstrahls und/oder parallel zur Propagationsrichtung des Laserstrahls erfolgen. Wichtig ist nur, dass der Bereich des Laserstrahls, in dem eine dauerhafte Materialmodifikation verwirklicht wird, relativ zu dem Substrat verlagert wird.

Gemäß einer Weiterbildung der Erfindung ist vorgesehen, dass Einzelpulsen des wenigstens einen Laserstrahls eine vorbestimmte zeitliche Form aufgeprägt wird. Durch zeitliches Formen des Laserstrahls beziehungsweise der Laserpulse, insbesondere Einzelpulse, kann die entstehende Lichtablenkungsstruktur zusätzlich beeinflusst werden.

Gemäß einer Weiterbildung der Erfindung ist vorgesehen, dass das Substrat nach dem Schritt b) zumindest bereichsweise erwärmt wird, um die erzeugten Typ-II-Modifikationen zu verändern. Insbesondere wird das Substrat zumindest bereichsweise derart erwärmt, dass die erzeugten Typ-II-Modifikationen - in vorbestimmter Weise - verändert werden. Durch solches nachträgliches Heizen des Substrats können Defekte ausgeheilt und beispielsweise optische Eigenschaften der induzierten periodischen Materialmodifikationen verändert werden. Dass das Substrat nach dem Schritt b) zumindest bereichsweise erwärmt wird, schließt ein, dass das Substrat optional nach dem Schritt c) oder nach dem Schritt d) erwärmt wird. Insbesondere wird das Substrat am Ende des Herstellungsprozesses, also nach dem Erzeugen aller Wechselwirkungsbereiche, entsprechend erwärmt.

Das Substrat wird dabei bevorzugt auf eine Temperatur T erwärmt, für die gilt:

$$0{,}5\, T_g < T < 1{,}2\, T_g \,,$$

wobei $T_g$ die Umwandlungstemperatur des Substrats ist. Die Umwandlungstemperatur ist dabei insbesondere die Temperatur, bei der die Viskosität des Substrats $10^{12}$ Pas beträgt.

Die Aufgabe wird auch gelöst, siehe Anspruch 7, indem eine Verwendung eines Substrats mit einer Lichtablenkungsstruktur geschaffen wird, wobei die Lichtablenkungsstruktur hergestellt ist in einem erfindungsgemäßen Verfahren oder in einer der zuvor beschriebenen Ausführungsformen des Verfahrens, wobei das Substrat als Lichtleitfaser, als Laserscheibe, als Glasdisplay oder als Solarzelle verwendet wird. Das Substrat besteht bestehend aus einem Material, das transparent oder teiltransparent für die zum Herstellen der Lichtablenkungsstruktur eingesetzte gepulste Laserstrahlung ist, mit einer ersten Reihe von räumlichen überlappenden Wechselwirkungsbereichen, und mit einer zweiten Reihe von räumlichen überlappenden Wechselwirkungsbereichen, wobei Typ-II-Modifikationen des Substratmaterials erzeugt werden, wobei sich die Typ-II-Modifikationen aufgrund selbstorganisierender Effekt durch mehrfaches Bestrahlen einer selben Stelle ergeben, und wobei eine beugende Ablenkungsgeometrie oder eine streuende Ablenkungsgeometrie erzeugt ist. Hierbei ergeben sich in besonderer Weise die in Zusammenhang mit der Lichtablenkungsstruktur beschriebenen Vorteile.

Insbesondere wenn das Substrat als Laserscheibe verwendet wird, kann die Lichtablenkungsstruktur dazu dienen, gewünschtes, stimuliert emittiertes und verstärktes Laserlicht in definierter Richtung aus der Laserscheibe auszukoppeln. Alternativ kann die Lichtablenkungsstruktur vorgesehen werden, um unerwünschtes, spontan emittiertes und verstärktes Licht möglichst breit gestreut, insbesondere wellenlängenabhängig in verschiedene Winkel gestreut, aus der Laserscheibe auszukoppeln, sodass die thermische Belastung umliegender Bereiche durch solche spontanen Emissionen verringert wird.

Wird das Substrat als Solarzelle verwendet, kann die Lichtablenkungsstruktur insbesondere dazu beitragen, in die Solarzelle eingefallenes Licht in dieser zu halten und damit die Effizienz und Ausbeute der Solarzelle zu erhöhen.

Die Aufgabe wird schließlich auch gelöst, siehe Anspruch 8, indem eine Lichtablenkeinheit geschaffen wird, die ein Substrat mit einer Lichtablenkungsstruktur aufweist, die hergestellt ist in einem erfindungsgemäßen Verfahren oder in einer der zuvor beschriebenen Ausführungsformen des Verfahrens. Das Substrat besteht bestehend aus einem Material, das transparent oder teiltransparent für die zum Herstellen der Lichtablenkungsstruktur eingesetzte gepulste Laserstrahlung ist, mit einer ersten Reihe von räumlichen überlappenden Wechselwirkungsbereichen, und mit einer zweiten Reihe von räumlichen überlappenden Wechselwirkungsbereichen, wobei Typ-II-Modifikationen des Substratmaterials erzeugt werden, wobei sich die Typ-II-Modifikationen aufgrund selbstorganisierender Effekt durch mehrfaches Bestrahlen einer selben Stelle ergeben, und wobei eine beugende Ablenkungsgeometrie oder eine streuende Ablenkungsgeometrie erzeugt ist. In Zusammenhang mit der Lichtablenkeinheit ergeben sich insbesondere die bereits zuvor beschriebenen Vorteile.

Die Aufgabe wird im Folgenden anhand der Zeichnung näher erläutert. Dabei zeigen:

Figur 1     eine schematische Darstellung zweier Ausführungsbeispiele einer Lichtablenkungsstruktur,

Figur 2     beispielhaft die Abhängigkeit einer Periode einer in einem bestimmten Substratmaterial erzeugten Lichtablenkungsstruktur von der Pulszahl pro Laserspot, und

Figur 3     beispielhaft die Abhängigkeit der Periode einer in einem bestimmten Substratmaterial erzeugten Lichtablenkungsstruktur von der Wellenlänge der zur Herstellung verwendeten Laserstrahlung.

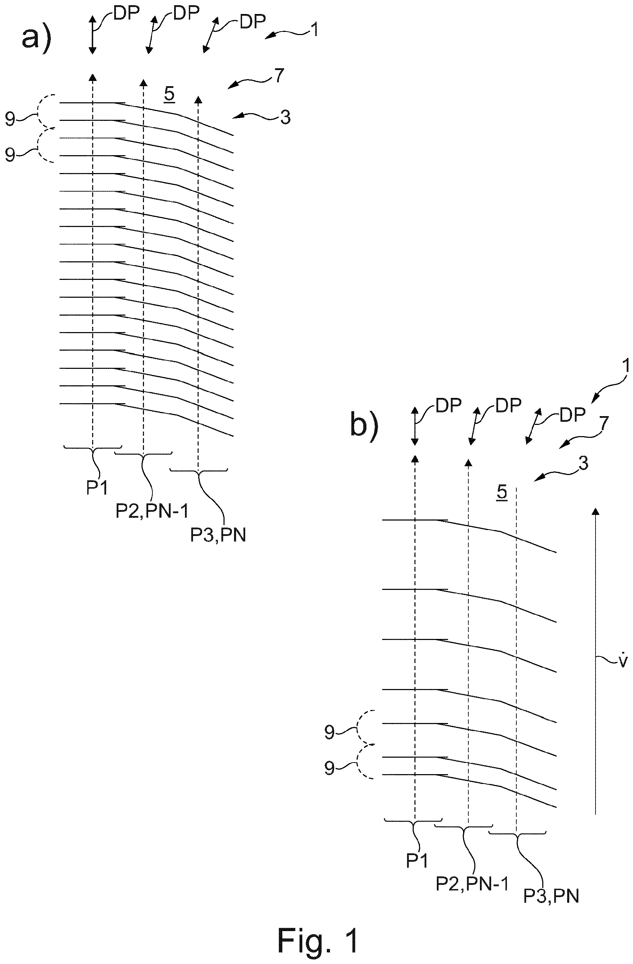

**Fig. 1** zeigt bei a) eine schematische Darstellung eines ersten Ausführungsbeispiels einer Lichtablenkeinheit 1 mit einem ersten Ausführungsbeispiel einer Lichtablenkungsstruktur 3, die in einem Substratmaterial 5 eines Substrats 7 mittels wenigstens eines gepulsten Laserstrahls hergestellt ist, insbesondere in einem Verfahren, welches folgende Schritte umfasst: Es wird eine erste Mehrzahl von Wechselwirkungsbereichen 9, von denen der besseren Übersichtlichkeit wegen nur zwei schematisch markiert und mit dem entsprechenden Bezugszeichen versehen sind, erzeugt. Die Wechselwirkungsbereiche 9 werden dabei entlang eines ersten Pfads P1 mit räumlicher Überlappung erzeugt - Schritt a).

Die Lichtablenkstruktur 3 wird insbesondere als Nanogitter erzeugt, dessen Gitterstege in Figur 1 durch schwarze Striche veranschaulicht sind.

Es wird - Schritt b) - eine zweite Mehrzahl von Wechselwirkungsbereichen 9 mit räumlicher Überlappung der Wechselwirkungsbereiche 9 entlang eines zweiten Pfads P2 erzeugt, wobei der zweite Pfad P2 zu dem ersten Pfad P1 versetzt ist, jedoch mit dem ersten Pfad P1 räumlich überlappt, was hier durch überlappende geschweifte Klammern verdeutlicht ist. Dies bedeutet insbesondere, dass die Wechselwirkungsbereiche der zweiten Mehrzahl von Wechselwirkungsbereichen 9, die entlang des zweiten Pfads P2 angeordnet sind, mit den Wechselwirkungsbereichen 9 der ersten Mehrzahl von Wechselwirkungsbereichen 9, die entlang des ersten Pfads P1 angeordnet sind, überlappen.

Optional wird eine weitere Mehrzahl von Wechselwirkungsbereichen 9 mit räumlicher Überlappung der weiteren Wechselwirkungsbereiche 9 entlang eines weiteren, zu den zuvor verwendeten Pfaden P1, P2 versetzten Pfads PN und mit räumlicher Überlappung zu dem unmittelbar zuvor verwendeten Pfad PN-1 erzeugt. Konkret wird hier eine dritte Mehrzahl von Wechselwirkungsbereichen 9 mit räumlicher Überlappung entlang eines dritten Pfads P3 erzeugt, der zu dem ersten Pfad P1 und zu dem zweiten Pfad P2 versetzt ist, aber mit dem zweiten Pfad P2 überlappt - Schritt c).

Dieser Schritt c) kann - Schritt d) - mehrfach ausgeführt werden, bis eine vorbestimmte Anzahl von Pfaden erhalten ist.

Im Rahmen des Verfahrens sind Typ II-Modifikationen in dem Substratmaterial 5 erzeugt.

Wenigstens ein Prozessparameter wird von Pfad zu Pfad verändert, um eine vorbestimmte Ablenkungsgeometrie zu erzeugen. Es ist auch möglich, dass wenigstens ein Prozessparameter bei der Erzeugung zumindest eines Pfades - innerhalb des Pfades - verändert wird, um die vorbestimmte Ablenkungsgeometrie zu erzeugen.

Die Ablenkungsgeometrie ist entsprechend der Erfindung eine beugende Ablenkungsgeometrie oder eine streuende Ablenkungsgeometrie.

Bei dem hier dargestellten Ausführungsbeispiel verlaufen die Pfade P1, P2, P3 entlang von Geraden. Es ist aber auch möglich, dass zumindest einer der Pfade entlang einer gekrümmten Kurve, insbesondere entlang eines Kreisbogens, verläuft. Es sind auch verschiedene Geometrien für verschiedene Pfade möglich.

Der wenigstens eine Prozessparameter ist bevorzugt ausgewählt aus einer Gruppe, bestehend aus: Einem Spektrum des Laserstrahls, einer Pulsenergie des Laserstrahls, einer Fluenz des Laserstrahls, einer zeitlichen Pulsbreite des Laserstrahls, einer zeitlichen Pulsform des Laserstrahls, einer räumlichen Pulsform des Laserstrahls, einer Strahldynamik des Laserstrahls, einer Polarisation, insbesondere Polarisationsrichtung, des Laserstrahls, einer Pulsrepetitionsrate, einer Mikropulsrepetitionsrate, einer Fokusgröße oder Laserspotgröße, insbesondere Fokusdurchmesser oder Laserspotdurchmesser, einer Fokus-Querschnittsform oder Laserspot-Querschnittsform, einem Fokusprofil oder Laserspotprofil, einem Vorschub eines Laserspots pro Zeiteinheit relativ zu dem Substrat 7, einer Pulszahl pro Laserspot oder einer Pulszahl pro Längeneinheit auf dem Substrat 7, und einem Überlapp unmittelbar einander benachbarter Wechselwirkungsbereiche 9 miteinander.

Bei dem hier dargestellten Ausführungsbeispiel wird die Polarisationsrichtung - hier schematisch dargestellt durch Doppelpfeile DP - als Prozessparameter von Pfad zu Pfad verändert.

Die Wechselwirkungsbereiche 9 werden bevorzugt zumindest entlang eines Pfads simultan oder zeitlich nacheinander, insbesondere durch Verlagern eines Fokusbereichs oder Laserspots des wenigstens einen Laserstrahls relativ zu dem Substrat 7, erzeugt.

Die verschiedenen Pfade können auch simultan von einer Mehrzahl von zueinander versetzten Laserstrahlen überstrichen werden, wobei insbesondere für jeden Pfad wenigstens ein Laserstrahl verwendet wird.

Bevorzugt wird Einzelpulsen des wenigstens einen Laserstrahls eine vorbestimmte zeitliche Form aufgeprägt.

Bevorzugt wird das Substrat 7 nach dem Schritt b), insbesondere nach dem Erzeugen aller Wechselwirkungsbereiche 9 entlang aller Pfade P1, P2, PN, zumindest bereichsweise erwärmt, um die erzeugten Typ-II-Modifikationen zu verändern.

Die Lichtablenkungsstruktur 3 wird vorzugsweise verwendet als Lichtleitfaser, als Laserscheibe, als Glasdisplay oder als Solarzelle.

Insgesamt liegt der Erfindung der Gedanke zugrunde, dass es die Erzeugung periodischer Materialmodifikationen, insbesondere Brechzahlmodifikationen, im Volumen und/oder an der Oberfläche (teil)-transparenter Materialien mittels ultrakurzer Laserpulse erlaubt, die Eigenschaften des transmittierten Lichtes zu beeinflussen und es gezielt abzulenken. Geometrische oder strukturelle Eigenschaften der induzierten Modifikationen (beispielsweise Periode, Brechzahlkontrast) und somit die Stärke und Orientierung der Ablenkung kann mittels Einschreibparametern und/oder Einschreib-Laserparametern, Strahlformung und/oder Strahldynamik gesteuert werden.

Fokussiert man ultrakurze Laserpulse eines Einschreiblasers in das Volumen eines Substrats, beispielsweise Quarzglas, führt die im Fokus vorliegende hohe Intensität zu nichtlinearen Absorptionsprozessen, wodurch die Materialmodifikationen induziert werden. Das Einschreiben kann punktweise und/oder zugleich an mehreren Ortspunkten, insbesondere durch einen raumzeitlich geformten Anregungsstrahl und/oder mittels Phasenmaske durchgeführt werden.

Die Strukturen können dazu dienen, entweder beugend oder auf Grundlage der inhärenten Streuung Licht in einen bestimmten Winkelbereich abzulenken. Die Orientierung der Ablenkung kann dabei durch die Periode des Gitters, welche durch Laserparameter wie beispielsweise der Wellenlänge des Einschreiblasers definiert ist, gesteuert werden. Die Stärke der Beugungseffizienz kann durch verschiedene Konzepte wie beispielsweise der Laserpulsenergie, dem Vorschub, und/oder mittels Strahldynamik, insbesondere zeitlich beispielsweise durch Laserbursts und/oder durch Strahlformung, gesteuert werden.

Je nach Substratmaterial 5 können die induzierten Nanostrukturen stark verschiedene strukturelle Eigenschaften aufweisen. In Gläsern entstehen insbesondere Nanogitter aus mikroskopischen Löchern mit anisotroper Form und Dimensionen von einigen hundert Nanometern Länge und wenigsten zehn Nanometern Dicke. Durch Bestrahlung mit Licht, beispielsweise im visuellen Spektralbereich, kommt es aufgrund der anisotropen Struktur zu einem Streukegel, der entsprechend der Gitterorientierung - stets parallel zur Polarisation des Einschreiblasers und damit insbesondere senkrecht zu den Gitterstegen des Nanogitters - ausgerichtet ist. Im Rahmen der hier vorgestellten technischen Lehre kann insbesondere auch diese gezielte Streuung zur Ablenkung des eingestrahlten Lichtes genutzt werden.

Werden solche laserinduzierten Nanogitter eng aneinander, insbesondere überlappend, eingeschrieben, ordnet sich das neu eingeschriebene Gitte kohärent an die Orientierung des bestehenden Gitters an. Es entsteht insbesondere eine selbstorganisierende Struktur. Dadurch können Regionen mit beispielsweise kontinuierlich veränderlicher Nanogitterorientierung erzeugt werden - siehe Figur 1a) - und somit Licht in einem großen Winkelspektrum abgelenkt oder gestreut werden.

Figur 1b) zeigt ein weiteres Ausführungsbeispiel einer Lichtablenkeinheit 1 mit einem weiteren Ausführungsbeispiel einer Lichtablenkungsstruktur 3.

Gleiche und funktionsgleiche Elemente sind in allen Figuren mit gleichen Bezugszeichen versehen, sodass insofern jeweils auf die vorangegangene Beschreibung verwiesen wird.

Bei diesem weiteren Ausführungsbeispiel ist durch Variation wenigstens eines Prozessparameters innerhalb der einzelnen Pfade insbesondere die induzierte Gitterperiode moduliert. Es ist insbesondere ein sogenannter Chirp erzeugt worden, wodurch eine breite Ablenkungs- oder Streuwinkelverteilung erzielt wird. Dies kann beispielsweise durch Variation von Prozessparametern wie Vorschub, Pulsüberlapp und/oder Wellenlänge des einschreibenden Laserstrahls erreicht werden. Solche gechirpten Gitter können mit konstanter oder variabler Ausrichtung erzeugt werden. Darüber hinaus können mehrere Nanogitterschichten hintereinander angeordnet die Wirkung der Ablenkung verstärken.

Konkret ist hier als Prozessparameter der Vorschub des Laserspots pro Zeiteinheit relativ zu dem Substrat 7, mithin eine Verlagerungsgeschwindigkeit des Laserstrahls, innerhalb der einzelnen Pfade geändert, um die Gitterperiode zu modulieren. Dabei ist schematisch durch einen Pfeil eine Beschleunigung *v* der Laserstrahls innerhalb der einzelnen Pfade dargestellt. Selbstverständlich kann alternativ die Verlagerungsgeschwindigkeit des Laserstrahls entlang eines Pfads auch reduziert werden.

Im Rahmen der hier vorgestellten technischen Lehre sind die periodischen Modifikationen auf die zu erzielende Ablenkungsgeometrie abgestimmt. Das heißt insbesondere, dass Gitterstege der Nanogitter - je nach Anwendungsfall - beliebige Winkel zur Materialoberfläche aufweisen können. Insbesondere wird die Geometrie der eingeschriebenen periodischen Modifikationen auf die zu erzielende Anwendung abgestimmt, wobei Konzepte wie Strahldynamik, Strahlformung, Mehrstrahlbearbeitung (Multiplex) genutzt werden können, um ausgedehnte Modifikationsbereiche im Material zu erzeugen.

Durch nachträgliches Heizen der hergestellten Lichtablenkungsstruktur 3 können Defekte ausgeheilt und zum Beispiel optische Eigenschaften der induzierten periodischen Materialmodifikationen verändert werden.

Zum Einschreiben periodischer Materialmodifikationen sind verschiedene Ansätze denkbar: Zum einen können ultrakurze Laserpulse per Mikroskopobjektiv in das Volumen des Substrats 7 fokussiert werden, und durch Scannen des Substrats 7 und/oder des Laserspots können ausgedehnte Bereiche strukturiert werden. Des Weiteren kann das Modifikations- oder Absorptionsgebiet durch strahlformende Elemente im Bearbeitungskopf wie beispielsweise diffraktive optische Elemente, räumliche Lichtmodulatoren, oder durch akusto-optische Deflektoren verändert werden. Letzteres kann auch hochdynamisch während der Bearbeitung passieren. Es können insbesondere digitale Optiken oder Scanner mit akusto-optischen Deflektoren eingesetzt werden. Die zeitliche Absorptionsdynamik kann durch kurze Pulszüge, insbesondere Bursts, modifiziert werden.

Bevorzugt werden in einem ersten Schritt die Abhängigkeiten der zu erzeugenden periodischen Materialmodifikationen von den verschiedenen Prozessparametern für ein zu bearbeitendes Substratmaterial 5 festgelegt und als Tabelle in einem Programm hinterlegt. Anschließend kann eine bestimmte Beugung oder Streuung oder Gitterperiode vorgegeben werden, und aus der Tabelle können die Steuerparameter für die Bearbeitung entnommen werden.

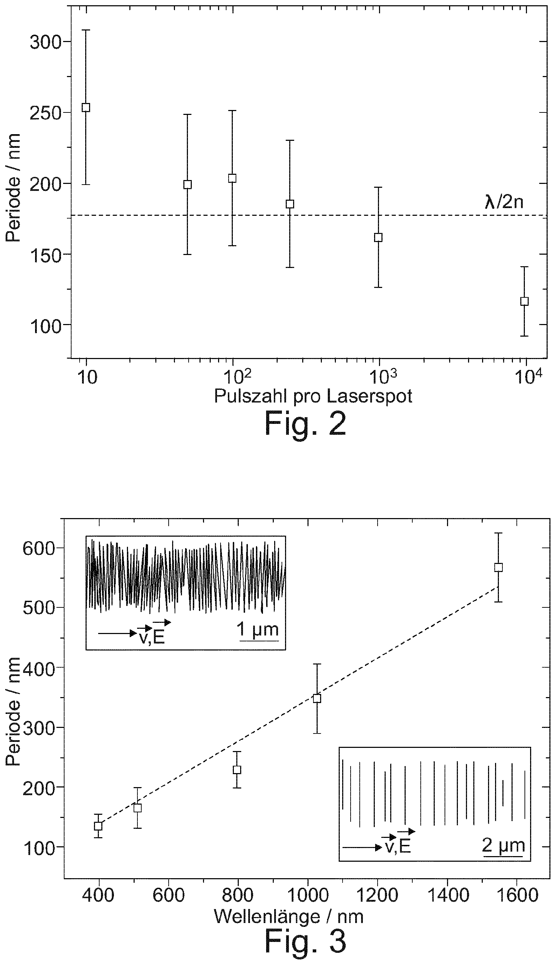

**Fig. 2** zeigt beispielhaft eine solche Abhängigkeit der zur erzeugenden periodischen Materialmodifikationen von einem Prozessparameter, hier konkret die Abhängigkeit der Periode des entstehenden Nanogitters von der Pulszahl pro Laserspot. Die Periode der Materialmodifikation ergibt sich dabei insbesondere durch $\lambda/2n$, das heißt durch die Wellenlänge $\lambda$ des verwendeten Laserstrahls dividiert durch den zweifachen Brechungsindex $n$ des Substratmaterials 5.

**Fig. 3** zeigt beispielhaft die Abhängigkeit der Periode der erzeugten Materialmodifikationen von der Wellenlänge $\lambda$ des Einschreiblasers.

**Patentansprüche**

1. Verfahren zum Herstellen einer Lichtablenkungsstruktur (3), wobei ein Substratmaterial (5) eines Substrats (7) mit wenigstens einem gepulsten Laserstrahl bestrahlt wird und wobei das Substratmaterial (5) transparent oder teiltransparent für die zum Herstellen der Lichtablenkungsstruktur eingesetzte, gepulste Laserstrahlung ist, mit folgenden Schritten:

    a) Erzeugen einer ersten Mehrzahl von Wechselwirkungsbereichen (9), in denen der wenigstens eine Laserstrahl jeweils mit dem Substratmaterial (5) wechselwirkt, entlang eines ersten Pfads (P1) mit räumlicher Überlappung der Wechselwirkungsbereiche (9);

**dadurch gekennzeichnet, dass** das Verfahren folgende Schritte enthält:

b) Erzeugen einer zweiten Mehrzahl von Wechselwirkungsbereichen (9) mit räumlicher Überlappung der Wechselwirkungsbereiche (9) entlang eines zweiten, zu dem ersten Pfad versetzten Pfads (P2) mit räumlicher Überlappung zu dem ersten Pfad (P1),

c) optional Erzeugen einer weiteren Mehrzahl von Wechselwirkungsbereichen (9) mit räumlicher Überlappung der weiteren Wechselwirkungsbereiche (9) entlang eines weiteren, zu den zuvor verwendeten Pfaden (P1,P2) versetzten Pfads (PN) und mit räumlicher Überlappung zu dem unmittelbar zuvor verwendeten Pfad (PN-1);

d) optional mehrfaches Ausführen des Schrittes c), um eine vorbestimmte Anzahl von Pfaden (P1,P2,PN) zu erhalten, wobei

- Typ-II-Modifikationen des Substratmaterials (5) erzeugt werden, wobei sich die Typ-II-Modifikationen aufgrund selbstorganisierender Effekte durch mehrfaches Bestrahlen einer selben Stelle ergeben, wobei

- wenigstens ein Prozessparameter von Pfad (P1,P2,PN) zu Pfad (P1,P2,PN) verändert wird, um eine vorbestimmte Ablenkungsgeometrie zu erzeugen, wobei der Prozessparameter ausgewählt ist aus einer Gruppe, bestehend aus: Einem Spektrum, einer Pulsenergie, einer Fluenz, einer zeitlichen Pulsbreite, einer zeitlichen Pulsform, einer räumlichen Pulsform, einer Strahldynamik, einer Polarisation, insbesondere Polarisationsrichtung, einer Pulsrepetitionsrate, einer Mikropulsrepetitionsrate, einer Fokusgröße, einer Fokus-Querschnittsform, und einem Fokusprofil, einem Vorschub eines Laserspots pro Zeiteinheit relativ zu dem Substrat (7), einer Pulszahl pro Laserspot, und einem Überlapp unmittelbar einander benachbarter Wechselwirkungsbereiche (9) miteinander,

wobei eine beugende Ablenkungsgeometrie oder eine streuende Ablenkungsgeometrie erzeugt wird.

2. Verfahren nach Anspruch 1, **dadurch gekennzeichnet, dass** der wenigstens eine Prozessparameter innerhalb wenigstens eines Pfads (P1,P2,PN), ausgewählt aus dem ersten Pfad (P1), dem zweiten Pfad (P2), und optional einem weiteren Pfad (PN) gemäß einem der Schritte c) und d), verändert wird, um die vorbestimmte Ablenkungsgeometrie zu erzeugen.

3. Verfahren nach einem der vorhergehenden Ansprüche, **dadurch gekennzeichnet, dass** wenigstens einer der Pfade (P1,P2,PN), ausgewählt aus dem ersten Pfad (P1), dem zweiten Pfad (P2) und optional einem weiteren Pfad (PN) gemäß einem der Schritte c) und d), entlang einer Geraden verläuft, und/oder dass wenigstens einer der Pfade (P1,P2,PN), ausgewählt aus dem ersten Pfad (P1), dem zweiten Pfad (P2) und optional einem weiteren Pfad (PN) gemäß einem der Schritte c) und d), zumindest bereichsweise eine endliche Krümmung aufweist.

4. Verfahren nach einem der vorhergehenden Ansprüche, **dadurch gekennzeichnet, dass** die Wechselwirkungsbereiche (9) zumindest entlang eines Pfades (P1,P2,PN), ausgewählt aus dem ersten Pfad (P1), dem zweiten Pfad (P2) und optional einem weiteren Pfad (PN) gemäß einem der Schritte c) und d), simultan oder zeitlich nacheinander, insbesondere durch Verlagern eines Fokusbereichs des wenigstens einen Laserstrahls relativ zu dem Substrat (7), erzeugt werden.

5. Verfahren nach einem der vorhergehenden Ansprüche, **dadurch gekennzeichnet, dass** Einzelpulsen des wenigstens einen Laserstrahls eine vorbestimmte zeitliche Form aufgeprägt wird.

6. Verfahren nach einem der vorhergehenden Ansprüche, **dadurch gekennzeichnet, dass** das Substrat (7) nach dem Schritt b) zumindest bereichsweise erwärmt wird, um die erzeugten Typ-II-Modifikationen zu verändern.

7. Verwendung eines Substrats (7) mit einer Lichtablenkungsstruktur (3), hergestellt in einem Verfahren nach einem der Ansprüche 1 bis 6, als Lichtleitfaser, als Laserscheibe, als Glasdisplay, oder als Solarzelle, Das Substrat (7) bestehend aus einem Material, das transparent oder teiltransparent für die zum Herstellen der Lichtablenkungsstruktur (3) eingesetzte gepulste Laserstrahlung ist, mit einer ersten Reihe von räumlichen überlappenden Wechselwirkungsbereichen (9), und mit einer zweiten Reihe von räumlichen überlappenden Wechselwirkungsbereichen, wobei Typ-II-Modifikationen des Substratmaterials (5) erzeugt sind, wobei sich die Typ-II-Modifikationen aufgrund selbstorganisierender Effekte durch mehrfaches Bestrahlen einer selben Stelle ergeben, und wobei eine beugende Ablenkungsgeometrie oder eine streuende Ablenkungsgeometrie erzeugt ist.

8. Lichtablenkeinheit (1), beinhaltend ein Substrat (7) mit einer Lichtablenkungsstruktur (3), hergestellt in einem Verfahren nach einem der Ansprüche 1 bis 6, wobei das Substrat (7) aus einem Material besteht, das transparent oder teiltransparent für die zum Herstellen der Lichtablenkungsstruktur (3) eingesetzte gepulste Laserstrahlung ist, mit einer ersten Reihe von räumlichen überlappenden Wechselwirkungsbereichen **gekennzeichnet durch** eine zweite Reihe von räumlichen überlappenden Wechselwirkungsbereichen, wobei Typ-II-Modifikationen des Substratmaterials (5) erzeugt sind, wobei sich die Typ-II-Modifikationen aufgrund selbstorganisierender Effekte durch mehrfaches Bestrahlen einer selben Stelle ergeben, und wobei eine beugende Ablenkungsgeometrie oder eine streuende Ablenkungsgeometrie erzeugt ist.

**Claims**

1. A method for producing a light deflection structure (3), wherein a substrate material (5) of a substrate (7) is irradiated with at least one pulsed laser beam and wherein the substrate material (5) is transparent or partially transparent for the pulsed laser radiation used to produce the light deflection structure, comprising the following steps:

   a) generating a first plurality of interaction regions (9), in each of which the at least one laser beam interacts with the substrate material (5), along a first path (P1) with spatial overlap of the interaction regions (9);

   **characterized in that** the method includes the following steps:

   b) generating a second plurality of interaction regions (9) with spatial overlap of the interaction regions (9) along a second path (P2) offset from the first path with spatial overlap to the first path (P1);
   c) optionally generating a further plurality of interaction regions (9) with spatial overlap of the further interaction regions (9) along a further path (PN) offset from the previously used paths (P1, P2) and with spatial overlap with the immediately previously used path (PN-1);
   d) optionally executing step c) several times to obtain a predetermined number of paths (P1, P2, PN), wherein

   - type II modifications of the substrate material (5) are produced, the type II modifications resulting from self-organizing effects due to multiple irradiation of a same location, wherein
   - at least one process parameter is changed from path (P1, P2, PN) to path (P1, P2, PN) to produce a predetermined deflection geometry, wherein the process parameter is selected from a group consisting of: a spectrum, a pulse energy, a fluence, a temporal pulse width, a temporal pulse shape, a spatial pulse shape, a beam dynamics, a polarization, in particular polarization direction, a pulse repetition rate, a micropulse repetition rate, a focus size, a focus cross-sectional shape, and a focus profile, a feed of a laser spot per unit time relative to the substrate (7), a pulse number per laser spot, and an overlap of directly adjacent interaction regions (9) with one another, wherein a diffractive deflection geometry or a scattering deflection geometry is generated.

2. The method according to claim 1, **characterized in that** the at least one process parameter is changed within at least one path (P1, P2, PN) selected from the first path (P1), the second path (P2), and optionally a further path (PN) according to one of steps c) and d), in order to generate the predetermined deflection geometry.

3. The method according to one of the preceding claims, **characterized in that** at least one of the paths (P1, P2, PN), selected from the first path (P1), the second path (P2) and optionally a further path (PN) according to one of steps c) and d), runs along a straight line, and/or **in that** at least one of the paths (P1, P2, PN), selected from the first path (P1), the second path (P2) and optionally a further path (PN) according to one of steps c) and d), has a finite curvature at least in certain regions.

4. The method according to one of the preceding claims, **characterized in that** the interaction regions (9) are generated simultaneously or successively in time at least along one path (P1, P2, PN) selected from the first path (P1), the second path (P2) and optionally a further path (PN) according to one of steps c) and d), in particular by shifting a focus region of the at least one laser beam relative to the substrate (7).

5. The method according to one of the preceding claims, **characterized in that** a predetermined temporal shape is imposed on individual pulses of the at least one laser beam.

6. The method according to one of the preceding claims, **characterized in that** the substrate (7) is heated after step b), at least in certain regions, in order to change the generated type II modifications.

**7.** A use of a substrate (7) with a light deflection structure (3), produced in a method according to one of claims 1 to 6, as an optical fiber, as a laser disk, as a glass display, or as a solar cell, the substrate (7) consisting of a material which is transparent or partially transparent for the pulsed laser radiation used to produce the light deflection structure (3), with a first series of spatially overlapping interaction regions (9), and with a second series of spatially overlapping interaction regions, wherein type II modifications of the substrate material (5) are produced, wherein the type II modifications result from self-organizing effects due to multiple irradiation of a same location, and wherein a diffractive deflection geometry or a scattering deflection geometry is produced.

**8.** A light deflection unit (1) comprising a substrate (7) with a light deflection structure (3) produced in a method according to any one of claims 1 to 6, wherein the substrate (7) is made of a material which is transparent or partially transparent to the pulsed laser radiation used to produce the light deflection structure (3), with a first series of spatially overlapping interaction regions, **characterized by** a second series of spatially overlapping interaction regions, wherein type II modifications of the substrate material (5) are generated, wherein the type II modifications result from self-organizing effects due to multiple irradiation of a same location, and wherein a diffractive deflection geometry or a scattering deflection geometry is generated.

**Revendications**

**1.** Procédé de fabrication d'une structure de déflexion de lumière (3), dans lequel un matériau de substrat (5) d'un substrat (7) est irradié avec au moins un faisceau laser pulsé, et dans lequel le matériau de substrat (5) est transparent ou partiellement transparent au rayonnement laser pulsé utilisé pour fabriquer la structure de déflexion de lumière, comportant les étapes suivantes :

a) génération d'une première pluralité de zones d'interaction (9), dans lesquelles ledit au moins un faisceau laser interagit avec le matériau de substrat (5), le long d'un premier chemin (P1) avec un chevauchement spatial des zones d'interaction (9);

**caractérisé en ce que** le procédé comprend les étapes suivantes :

b) génération d'une deuxième pluralité de zones d'interaction (9) avec un chevauchement spatial des zones d'interaction (9) le long d'un deuxième chemin (P2) décalé par rapport au premier chemin (P1), avec un chevauchement spatial avec le premier chemin ;
c) génération éventuellement d'une autre pluralité de zones d'interaction (9) avec un chevauchement spatial des autres zones d'interaction (9) le long d'un autre chemin (PN) décalé par rapport aux chemins (P1, P2) utilisés précédemment et avec un chevauchement spatial par rapport au chemin (PN-1) utilisé immédiatement avant ;
d) éventuellement exécution répétée de l'étape c) pour obtenir un nombre prédéterminé de chemins (P1, P2, PN), dans lequel

- des modifications de type II du matériau de substrat (5) sont générées, dans lequel les modifications de type II résultent d'effets d'auto-organisation par irradiation multiple d'un même emplacement, dans lequel
- au moins un paramètre de processus est modifié d'un chemin (P1, P2, PN) à un chemin (P1, P2, PN) afin de générer une géométrie de déflexion prédéterminée, dans lequel le paramètre de processus est sélectionné dans un groupe constitué par : un spectre, une énergie d'impulsion, une fluence, une largeur d'impulsion temporelle, une forme d'impulsion temporelle, une forme d'impulsion spatiale, une dynamique de faisceau, une polarisation, en particulier une direction de polarisation, un taux de répétition d'impulsions, un taux de répétition de micro-impulsions, une taille de foyer, une forme de section transversale de foyer et un profil de foyer, une vitesse d'avancement d'un point laser par rapport au substrat (7), un nombre d'impulsions par point laser, et un chevauchement de zones d'interaction (9) immédiatement adjacentes entre elles, dans lequel une géométrie de déflexion diffractive ou une géométrie de déflexion diffusive est générée.

**2.** Procédé selon la revendication 1, **caractérisé en ce que** ledit au moins un paramètre de processus est modifié sur au moins un chemin (P1, P2, PN), sélectionné parmi le premier chemin (P1), le deuxième chemin (P2) et éventuellement un autre chemin (PN) selon l'une des étapes c) et d), pour générer la géométrie de déflexion prédéterminée.

**3.** Procédé selon l'une des revendications précédentes, **caractérisé en ce qu'**au moins un des chemins (P1, P2, PN), sélectionné parmi le premier chemin (P1), le deuxième chemin (P2) et éventuellement un autre chemin (PN) selon l'une des étapes c) et d), suit une droite, et/ou **en ce qu'**au moins un des chemins (P1, P2, PN), sélectionné parmi le premier chemin (P1), le deuxième chemin (P2) et éventuellement un autre chemin (PN) selon l'une des étapes c) et d), présente au moins dans certaines zones une courbure finie.

4. Procédé selon l'une des revendications précédentes, **caractérisé en ce que** les zones d'interaction (9) sont générées simultanément ou séquentiellement au moins le long d'un chemin (P1, P2, PN), sélectionné parmi le premier chemin (P1), le deuxième chemin (P2) et éventuellement un autre chemin (PN) selon l'une des étapes c) et d), en particulier en déplaçant une zone focale dudit au moins un faisceau laser par rapport au substrat (7).

5. Procédé selon l'une des revendications précédentes, **caractérisé en ce qu'**une forme temporelle prédéterminée est appliquée aux impulsions individuelles dudit au moins un faisceau laser.

6. Procédé selon l'une des revendications précédentes, **caractérisé en ce que** le substrat (7) est chauffé au moins par zones après l'étape b) afin de changer les modifications de type II générées.

7. Utilisation d'un substrat (7) avec une structure de déflexion de lumière (3), fabriqué par un procédé selon l'une des revendications 1 à 6, comme fibre optique, comme disque laser, comme écran en verre ou comme cellule solaire, le substrat (7) étant constitué d'un matériau qui est transparent ou partiellement transparent au rayonnement laser pulsé utilisé pour fabriquer la structure de déflexion de lumière (3), avec une première rangée de zones d'interaction (9) se chevauchant spatialement, et avec une deuxième rangée de zones d'interaction se chevauchant spatialement, dans lequel des modifications de type II du matériau de substrat (5) sont générées, dans lequel les modifications de type II se produisent en raison d'effets d'auto-organisation par irradiation multiple d'un même emplacement, et dans lequel une géométrie de déflexion diffractive ou une géométrie de déflexion diffusive est générée.

8. Unité de déflexion de lumière (1) comprenant un substrat (7) avec une structure de déflexion de lumière (3), fabriquée par un procédé selon l'une des revendications 1 à 6, dans laquelle le substrat (7) est constitué d'un matériau qui est transparent ou partiellement transparent au rayonnement laser pulsé utilisé pour fabriquer la structure de déflexion de lumière (3), avec une première rangée de zones d'interaction se chevauchant spatialement, **caractérisée par** une deuxième rangée de zones d'interaction se chevauchant spatialement, dans laquelle des modifications de type II du matériau de substrat (5) sont générées, dans laquelle les modifications de type II résultent d'effets d'auto-organisation par irradiation multiple d'un même emplacement, et dans laquelle une géométrie de déflexion diffractive ou une géométrie de déflexion diffusive est générée.

a)

DP    DP    DP    1

7

5    3

9

9

P1

P2,PN-1

P3,PN

b)

DP    DP    DP    1

7

3

5

9

9

P1

P2,PN-1

P3,PN

v̇

Fig. 1

Fig. 2

Fig. 3

**IN DER BESCHREIBUNG AUFGEFÜHRTE DOKUMENTE**

**In der Beschreibung aufgeführte Patentdokumente**

- EP 2965852 A1
- WO 2019158910 A1